# FASCICULE DE BREVET EUROPEEN

(11) **EP 1 371 153 B1**
(45) Date de publication et mention de la délivrance du brevet: **05.11.2008**
(21) Numéro de dépôt: 02708448.2
(22) Date de dépôt: 06.03.2002
(51) Int. Cl.: H04B 7/26

(54) **PROCEDE ET DISPOSITIF DE RECEPTION DE SIGNAUX DE SYNCHRONISATION**
VERFAHREN UND VORRICHTUNG ZUM EMPFANG VON SYNCHRONISATIONSSIGNALEN
METHOD AND DEVICE FOR RECEIVING SYNCHRONIZATION SIGNALS

(30) Priorité: 20.03.2001 FR 0103780
(43) Date de publication de la demande: 17.12.2003
(73) Titulaire: SAGEM MOBILES, 75512 Paris (FR)
(72) Inventeur: HEURTAUX, Frédéric, F-13610 Le Puy Ste Reparade (FR); VESSIERE, Thierry, F-95280 Jouy Le Moutier (FR)
(74) Mandataire: Schmit, Christian Norbert Marie
(86) Numéro de dépôt international: PCT/FR2002/000814
(87) Numéro de publication internationale: WO 2002/075961

(56) Documents cités:
- EP-A- 1 081 855
- WO-A-01/60003
- US-A- 4 466 108
- US-B1- 6 192 088
- CHARBIT G ET AL: "Frame synchronisation and frequency-carrier estimation for GSM mobile communications" EPMCC. EUROPEAN PERSONAL MOBILE COMMUNICATIONS CONFERENCE TOGETHER WITH ITG-FACHTAGUNG, MOBILE KOMMUNIKATION, XX, XX, no. 145, 30 septembre 1997 (1997-09-30), pages 449-457, XP002100275

## Description

La présente invention a pour objet un procédé et un dispositif de réception, ainsi que de traitement, de signaux dits de fréquence et/ou de synchronisation. De tels signaux sont normalement transmis par des stations de bases d'un réseau de téléphonie mobile et sont destinés à permettre aux téléphones mobiles en relation avec ces stations de base de se caler en fréquence et en temps, en respectant des contraintes qui elles-mêmes sont dictées par la pérennité du réseau. Elle a pour vocation à s'appliquer dans tous les réseaux de téléphonie mobile, notamment, mais pas seulement de type GSM, UMTS, DCS, PCS et autres.

Dans de tels réseaux, on emploie un cadencement des émissions et des réceptions selon un mode de trame, chaque trame pouvant en particulier être divisée en fenêtres temporelles. Dans le mode dit GSM en particulier, avec un accès multiple à répartition en fréquence, FDMA dans la littérature anglo-saxonne, des canaux de fréquence de largueur étroite, dans la pratique de 200 KHz, sont institués et, contigus les uns aux autres, forment la totalité de la bande. Dans le mode dit UMTS, un accès multiple à répartition par le code, CDMA en littérature anglo-saxonne, est institué. Il conduit à des canaux de largueur plus grande, en pratique de 2ⁿ fois une bande de base de 200 KHz. De plus, que la transmission se fasse ou non avec agilité en fréquence, le calage des récepteurs sur la fréquence exacte d'émission est une contrainte particulièrement sévère. La même contrainte vaut pour les systèmes à répartitions par la fréquence ou à répartition par le code. Cette contrainte impose une précision de calage de fréquence des oscillateurs (synthétiseurs) des récepteurs des téléphones mobiles voisine de quelques parties par million seulement.

Traditionnellement, les systèmes de téléphonie mobile emploient des canaux de trafic, par lesquels sont transmises des informations ou des données que se communiquent mutuellement les usagers, et des canaux de balise par lesquels les réseaux de téléphonie mobile transmettent une signalisation aux téléphones mobiles, notamment sur l'état du réseau. Un téléphone mobile qui est en relation avec une station de base, soit en campement lorsqu'il est en veille, soit en transmission de données lorsqu'il utilise le réseau pour transmettre et recevoir, doit par ailleurs surveiller des stations de base voisines de cette station de base. Cette surveillance consiste à mesurer pour chacune de ces stations de base voisine la qualité de la réception qu'il perçoit, et à transmettre des informations correspondantes à sa station de base (sur son propre canal de trafic). De cette manière, cette station de base peut organiser la mobilité du téléphone mobile, c'est-à-dire faire assurer la communication par une autre station de base lorsque les conditions de transmission de cette station de base avec le téléphone mobile deviennent insuffisantes.

Dans le domaine du GSM et plus généralement de la téléphonie mobile, les signaux échangés entre une station de base et un téléphone mobile servent d'une part à moduler une fréquence porteuse Fp pour transporter des données éditées par les utilisateurs. La fréquence Fp est choisie parmi un ensemble de fréquences porteuses utilisables pour une telle liaison. D'autre part, des signaux de signalisation servent à indiquer au téléphone mobile quelle sera la fréquence Fp sur laquelle il aura à converser quand ce téléphone mobile sera appelé.

En outre pour une voix fréquentielle Fp, on constitue un canal en partageant le temps alloué à un utilisateur et à un ou plusieurs autres, mode dit TDMA dans la littérature angle saxonne. Dans ce cas, on constitue des fenêtres temporelles. Dans un exemple, dans le cas du GSM en particulier, la durée d'une telle fenêtre temporelle est de 577 microsecondes. Pour des fenêtres temporelles successives, différents canaux sont ainsi constitués qui permettent différentes communications, réunissant différents interlocuteurs et leur permettant de converser entre eux. Dans la pratique on constitue ainsi des trames avec un certain nombre de fenêtres temporelles. Dans un exemple où il y a huit fenêtres temporelles par trame, la durée d'une trame est de 4,615 millisecondes. Le rang d'une fenêtre temporelle dans la trame est aussi une des indications qui doivent être données au téléphone mobile dans les signaux de signalisation pour lui dire comment doivent s'échanger les différentes informations entre lui et l'interlocuteur qui l'appelle.

Dans le mode dit GPRS, General Packet Radio Service, service général de transmission de paquets, plutôt que de n'accorder qu'une fenêtre temporelle par trame au téléphone mobile pour recevoir des données de la station de base, on prévoit que le mode de transmission soit déséquilibré. Par exemple au cours d'une trame, un certain nombre de fenêtres temporelles consécutives sont consacrées à la réception et un nombre plus restreint de fenêtres temporelles sont consacrées à l'émission par le téléphone mobile. Un tel mode déséquilibré est justifié notamment pour une consultation de type Internet dans laquelle les questions sont courtes, mais dans laquelle les réponses provenant du réseau Internet sont longues (transmission d'image en particulier).

Dans le mode GPRS on définit ainsi 24 classes de communication. Dans la classe 8 de communication, dite GPRS 4+1, un téléphone mobile reçoit des informations en provenance du réseau pendant quatre fenêtres temporelles successives et ne transmet ses requêtes que pendant une fenêtre. L'invention sera décrite principalement en référence à ce mode GPRS 4+1, mais elle visera également le mode GPRS 5+1 pour lequel les contraintes de mise en oeuvre sont encore plus sévères, ainsi que d'autres modes normaux de trafic.

En plus d'un canal de trafic, fréquence Fp, fenêtre q alloués à un téléphone mobile en relation avec une station de base, cette station de base doit émettre un signal à une fréquence balise Fb. Le signal modulant la fréquence balise Fb comporte la signalisation qui permet au téléphone mobile notamment de venir aux renseignements auprès de cette station de base pour savoir si son état de veille peut être perpétué pendant une séquence supplémentaire ou s'il fait l'objet d'un appel entrant qui lui est destiné. L'aérien de la station de base est capable d'émettre en même temps les signaux de signalisation à la fréquence Fb et les signaux de communication eux-mêmes aux fréquences Fp.

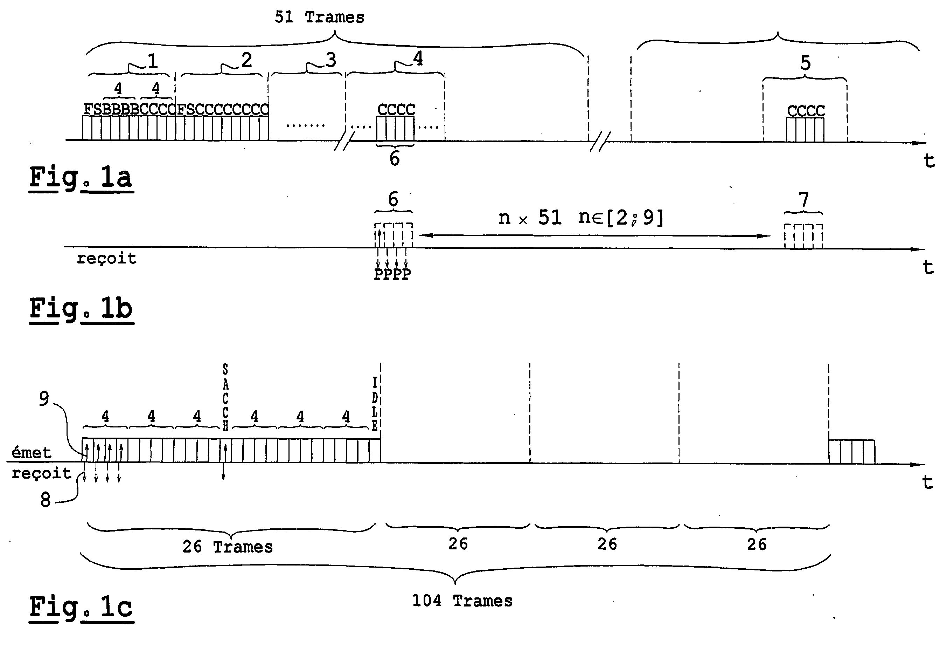

Dans le canal de balise qui en pratique est constitué de la même façon qu'un canal de trafic pour des paroles ou des données, on réalise des trames et des fenêtres temporelles dans ces trames. Pour organiser une veille, figure 1a, on prévoit que les signaux disponibles sur la voie de balise comportent un motif répété toutes les 51 trames, c'est-à-dire approximativement toutes les 235 millisecondes. Ce motif comporte des groupements de dix ou onze trames. Un premier groupement 1 de ce motif est différent des groupements suivants 2 à 4. Il comporte dans chacune des dix trames qui le compose respectivement des signaux dits FCCH, SCH, BCCH et CCCH. Ces signaux sont symbolisés par les lettres F, S, B et C en face respectivement des trames auxquelles ils appartiennent. Sur le plan pratique sur la figure 1a, bien que les émissions ne se produisent que pendant la première fenêtre temporelle dite TS0 d'une trame, on les a représentées par des fenêtres temporelles correspondant à la trame entière.

Les signaux FCCH signifient Frequency Control CHannel, ce qui se traduit par Canal de Fréquence. Ils correspondent en fait à une émission d'une porteuse Fb (des signaux de signalisation) modulée par une sinusoïde pure à 67,7 KHz du centre du canal. Cette émission dure pendant toute la fenêtre temporelle. Un téléphone mobile qui vient d'être allumé peut ainsi rechercher un signal qui module la fréquence Fb. Ceci lui est facilité par le fait que la porteuse Fb est émis à un niveau plus élevé en puissance que les autres signaux échangés par une station de base avec un quelconque des téléphones mobiles de son entourage. Dans ce but il est connu qu'un téléphone mobile doive se lancer, au moment de son allumage puis par la suite régulièrement pour la surveillance, dans une procédure de scrutation des fréquences porteuses de balise et rechercher celles pour laquelle il reçoit un signal le plus élevé. Alors que des fréquences porteuses Fp de canaux de trafic sont soumises à une agilité de fréquence, d'une fenêtre temporelle à une autre, la fréquence de balise Fb est maintenue constante. Il suffit donc pour le mobile d'écouter toutes les dix trames, ou toutes les onze trames selon le cas, quelle est la fréquence Fb qu'il reçoit le plus.

Une fois que cette fréquence Fb est identifiée, dans une trame suivante, mais pour une fenêtre de même rang, le téléphone mobile reçoit un signal de signalisation SCH pour Synchronous CHannel qui veut dire Canal de Synchronisation. Les signaux SCH comportent, pour ce qui concerne un aspect de l'invention, une séquence d'apprentissage permettant un calage temporel fin (inférieur à une microseconde), et des données renseignant sur un numéro de trame, une couleur de station de base, et un rang du signal S reçu parmi les groupements de trames dans le motif à 51 trames.

Le premier groupement 1 comporte ensuite un groupe de quatre fenêtres temporelles B, associées dans des trames successives, et qui transportent des signaux de type BCCH pour Broadcast Control CHannel dont la signification est canal de contrôle de la diffusion. Les informations contenues dans ces signaux BCCH sont d'une part la désignation d'une périodicité d'écoute imposée à un téléphone mobile pour savoir quand lui seront envoyés les éventuels signaux l'informant de ce qu'il est sujet à un appel entrant. La périodicité de cette écoute imposée, dans le cadre du GSM, est comprise entre deux fois et neuf fois le motif de 51 trames. Autrement dit une fois que dans ce motif de 51 trames un canal aura été alloué à un téléphone mobile (lequel canal comportera quatre fenêtres temporelles dans quatre trames successives), le téléphone mobile devra être à l'écoute de ces quatre fenêtres temporelles toutes les n fois 51 trames, n étant compris entre deux et neuf. Bien entendu, les informations de signalisation BCCH indiquent également quelles sont les quatre fenêtres temporelles qui lui sont dédiées pour lui faire-part de l'existence d'un tel appel.

Les signaux de signalisation BCCH renseignent par ailleurs sur d'autres paramètres de fonctionnement du téléphone mobile. Notamment, un téléphone mobile se trouvant situé dans un domaine de rayonnement d'une première station de base est susceptible de se déplacer dans un domaine contigu et gouverné par une autre station de base. Dans ses signaux de signalisation, la première station de base indique également au téléphone mobile quelles sont les cellules contiguës dont le téléphone mobile doit mesurer le niveau de réception de la fréquence balise. On verra par la suite comment le téléphone mobile informe ensuite cette première station de base des niveaux de signaux de balise reçus en provenance de ces autres stations de base. En tous cas, cette information va bien entendu servir lorsque le mobile se déplacera pour que la communication ne soit plus assurée par la première station de base mais par une autre station de base contiguë.

Dans le premier motif 1 de dix trames, il y a ensuite quatre trames, donc quatre fenêtres temporelles TS0 en fait, dans lesquelles sont émis des signaux CCCH pour Control CHannel, signifiant canal de commande. Par opposition aux signaux de type BCCH qui sont écoutés par tous les téléphones mobiles situés sous la dépendance d'une station de base, des signaux CCCH ne sont écoutés que par un petit groupe de téléphones mobiles particuliers. Les groupements 2 à 4 suivant le groupement 1 comportent également des signaux FCCH et SCH en début de motif. Chacun comporte deux groupes de quatre fenêtres C avec des signaux CCCH attribués à des téléphones mobiles différents. Les signaux CCCH sont essentiellement destinés à contenir des signaux de type PCH Paging CHannel qui sont les signaux d'appel sur un canal d'appel. En définitive, pour un téléphone mobile l'essentiel est de savoir si dans les quatre fenêtres temporelles des signaux CCCH qui lui sont attribuées se trouvent, ou ne se trouvent pas, des signaux PCH l'informant de ce qu'il est sujet à un appel entrant ou non.

Toute cette procédure conduit un téléphone mobile qui est en veille à écouter au début du motif de 51 trames le signal FCCH et le signal SCH, ainsi que les quatre fenêtres temporelles des signaux BCCH. Puis le téléphone mobile prend rendez-vous temporel pour des signaux CCCH 6 qui lui sont plus particulièrement destinés. La figure 1b montre alors que le téléphone mobile 1 doit se mettre en écoute d'éventuels signaux PCH qui seraient émis pendant ce groupement 6. Si de tels signaux ne sont pas émis, parce que le téléphone mobile 1 n'est pas appelé, ce téléphone mobile doit se décaler jusqu'à un autre rendez-vous pour recevoir d'éventuels autres signaux PCH 7, qui le concernent et qui sont susceptibles d'être envoyés n fois 51 trames plus tard, n appartenant à un intervalle compris entre deux et neuf, n est notamment indiqué au téléphone mobile par le signal BCCH qu'il a reçu préalablement. Dans la pratique n dépend de la charge de la station de base. Si elle a affaire à peu de téléphones mobiles n vaudra deux. Si par contre elle à gérée un grand nombre de communications, jusqu'à 81 communications, alors n vaudra neuf.

Autant les figures 1 a et 1 b montrent le canal de balise, autant la figure 1c montre le canal de trafic, en mode normal. Dans celui-ci, une périodicité de 26 trames est instituée. Les signaux BCCH ont attribué à la relation entre un téléphone mobile et une station de base une fenêtre temporelle 8 au cours de chaque trame pour que le téléphone mobile reçoive des signaux de parole (ou autre) en provenance de la station de base. Une fenêtre temporelle 9, décalée de la fenêtre 8 d'au moins deux fenêtres temporelles, permet au téléphone mobile d'émettre des signaux de parole (ou autre) à destination de la station de base. La figure 1c montre en tirets les signaux reçus pendant la fenêtre 8 alors qu'elle montre en trait plein les signaux émis pendant la fenêtre 9 dans une même trame. La périodicité de 26 trames comporte ainsi trois groupements de quatre trames suivies d'une trame dite SACCH au cours de laquelle le mobile rapatrie à la station de base des mesures effectuées sur les stations de base voisine. Puis trois autres groupements de quatre trames sont suivis par une trame dite idle (oisif) au cours de laquelle le téléphone mobile mesure l'activité des stations de base voisines (en prévision d'un basculement - hand over - notamment).

Comme le motif du canal de balise (même celui d'une station de base voisine) est à 51 trames, qui est un nombre premier avec 26 trames, un glissement se produit au fur et à mesure du temps de façon que, quelle que soit la station de base voisine, sa fenêtre temporelle TS0 de canal FCCH (ou SCH) finit toujours par tomber dans la trame idle, glissante, du téléphone mobile qui la surveille. De ce fait, la mesure de l'activité d'une station de base voisine est toujours en théorie possible. Ceci est d'autant plus vrai que la phase idle ne débute pas seulement avec la fenêtre temporelle TS0 de cette trame, mais en fait avec la fin de la dernière fenêtre temporelle utilisée par le téléphone mobile pour converser avec sa station de base. Ou, si cette dernière fenêtre utilisée est la fenêtre TS7 (la dernière fenêtre de la trame), alors la phase idle se prolonge sur les premières fenêtres inemployées de la trame de trafic suivante. De ce fait, la durée de mesure disponible à la station de base est d'au moins neuf fenêtres temporelles. Elle est au plus de dix fenêtres temporelles, même en mode de transmission GPRS.

En effet, avec une trame à huit fenêtres temporelles, et en consacrant quatre fenêtres à la réception et une fenêtre à l'émission, un téléphone mobile doit par ailleurs être capable de passer rapidement de la réception à l'émission ( temps Tta) et réciproquement de l'émission à la réception ( temps Trb).

Dans la pratique le cadencement des trames d'émission n'est pas en phase avec le cadencement des trames de réception, à l'endroit du téléphone mobile. En effet, ces cadencements sont en phase à l'endroit de la station de base, alors, qu'à l'endroit des téléphones mobiles ils supportent un décalage. Ce décalage est égal au double du temps de propagation aller/retour, dit TA (Timing Advance). Aussi, compte tenu de l'éloignement du téléphone mobile de la station de base (TA), compte tenu des caractéristiques propres du téléphone mobile (Tta, Trb), et compte tenu de la durée d'occupation du canal selon la classe GPRS retenue (4+1, 5+1), le téléphone mobile dispose d'une durée égale au minimum à une trame (huit fenêtres temporelles) correspondant à son mode de surveillance des canaux, augmentée des résidus des sauts en fréquence du téléphone mobile. Dans le mode GPRS 5+1, et à condition d'avoir des rapidités de ralliement élevées, avec des sauts en fréquence donc la durée est inférieure à la moitié de la durée d'une fenêtre temporelle, on peut disposer de neuf fenêtres temporelles consécutives (voire de dix fenêtres temporelles consécutives dans le mode GPRS 4+1) pour surveiller les stations de base voisine.

Cependant, dans certaines configurations, une telle durée libre ne permet pas, même théoriquement, de mesurer les caractéristiques de stations de base voisines. En effet, c'est le cas lorsque la fenêtre temporelle à surveiller d'une station de base contiguë à mesurer est située en partie lors de la dernière fenêtre temporelle de la trame de réception du téléphone mobile.

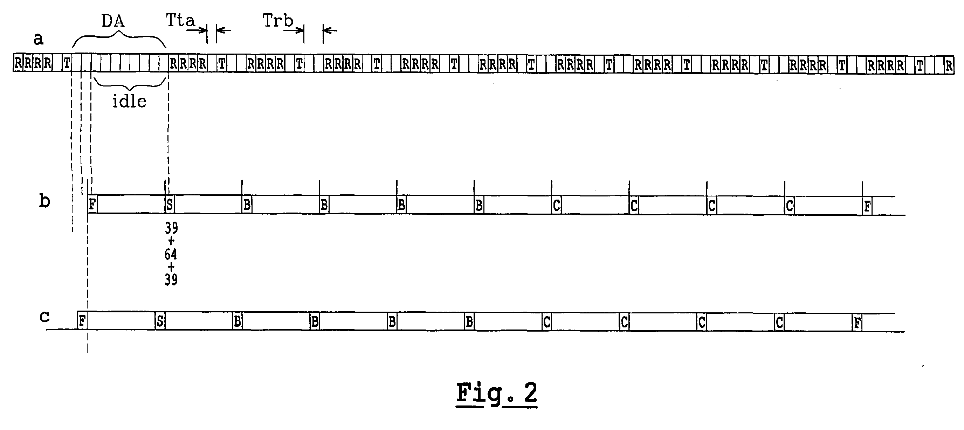

La figure 2, partie supérieure a, montre notamment dans le cadre de la transmission de type GPRS 4+1 comment une telle configuration défavorable peut se présenter. En effet, la figure 2 montre d'une part en partie haute le cadencement des trames de transmission avec dans chaque trame quatre fenêtres de réception R et, séparée de la dernière fenêtre de réception par une durée Tta de l'ordre de une fenêtre temporelle, une fenêtre temporelle de transmission T utilisée par le téléphone mobile pour transmettre une requête à la station de base. On notera que le temps Tta propre au téléphone mobile est en fait un temps variable : il dépend d'une part du temps de ralliement pur du téléphone mobile d'une fréquence à une autre (ici de la fréquence de réception à la fréquence d'émission), combiné avec le décalage résultant du temps TA dû à la propagation entre le téléphone mobile et la station de base. Ce mode GPRS 4+1 laisse ainsi apparaître pour chaque trame, en fin de trame, environ deux fenêtres temporelles, temps Trb, que le mobile pourrait utiliser pour effectuer la mesure des signaux de type F, ou des signaux de type S.

La partie inférieure b de la figure 2 montre par contre que, du fait des désynchronisations des stations de base, celle avec laquelle trafique le téléphone mobile et celle qu'il doit surveiller, la fenêtre temporelle à surveiller peut être située à cheval sur le début de la trame idle pendant laquelle le téléphone mobile est réputé être oisif du fait du cadencement à vingt-six trames. En partie c encore inférieure, la fenêtre temporelle à surveiller peut même être située en partie à cheval sur la fenêtre temporelle précédente.

Du fait que les stations de base adoptent rigoureusement un même cadencement synchrone, même si elles ne sont pas synchronisées les unes avec les autres, cette situation se reproduit d'une manière systématique, et ce indépendamment du glissement provoqué par le caractère premier entre eux des nombres 26 et 51. Il en résulte que, si le téléphone mobile n'est pas suffisamment rapide pour aller mesurer le signal F lors du début d'une durée d'analyse DA, bien entendu il ne pourra pas le mesurer à la fin de cette fenêtre d'analyse. En effet, occurrence b, la fenêtre temporelle TS0 de la station de base à surveiller serait à cheval sur la première fenêtre temporelle de réception succédant à la durée idle. Ou bien, occurrence c, la fenêtre temporelle S (ou F) à surveiller se situerait à la fin de la durée d'analyse. Dans ce cas, le temps laissé au téléphone mobile pour rallier la fréquence de réception de la première fenêtre temporelle de réception suivante est insuffisant. Il résulte de ces situations que, dans le voisinage du téléphone mobile, il peut se trouver une station de base tout à fait adaptée pour l'accueillir mais dont la configuration temporelle est trop proche de celle de la station de base avec laquelle il trafique pour qu'il puisse même en mesurer l'existence et la signaler à sa station de base, en vue notamment de provoquer un hand over avec elle.

L'invention a pour objet de remédier à ce problème de diverses manières. D'une manière générale dans l'invention on prévoit que si la mesure par des voies classiques, comme exposé ci-dessus, de la présence d'une station de base n'est pas possible, le téléphone mobile mettra en oeuvre une procédure spéciale, choisie parmi celles qui vont être décrites ci-après. L'incitation à lancer une telle procédure spéciale sera possible pour le téléphone mobile puisque, parmi la liste des stations de base voisines transmise par sa station de base, il existe des stations de base dont il n'arrive pas à capter la fréquence de balise. Pour ces dernières, il devra donc tenter une procédure spéciale.

L'invention a donc pour objet un procédé de détection et de mesure, dans un téléphone mobile, d'un signal de fréquence et ou d'un signal de synchronisation, dits respectivement FCCH et SCH, émis selon des occurrences multiples conformément à un protocole de téléphonie mobile de type GSM, dans lequel
- le téléphone mobile détecte et mesure ce signal de fréquence et ou de mesure s'il se situe pendant une de ses fenêtres d'analyse,
caractérisé en ce que
- le téléphone mobile lance une détection et une mesure spéciale si ce signal de fréquence et ou de synchronisation se situe en partie dans une dernière fenêtre temporelle de cette fenêtre d'analyse.

Dans une des procédures spéciales, la solution préconisée par l'invention est d'augmenter la vitesse de ralliement du téléphone mobile. Sur le plan pratique de nombreux efforts technologiques ont déjà été faits dans ce sens. Cependant, ils aboutissent à ce que le ralliement d'une fréquence (d'émission où de réception) à une autre (de réception où d'émission) prend une durée de l'ordre d'une demi-fenêtre temporelle. Compte tenu de ce qu'il faut exécuter cette opération deux fois on constate que, sur une durée d'analyse, environ une durée de fenêtre temporelle est ainsi perdue pour les ralliements. Avec l'invention en accélérant, on va gagner environ une demi fenêtre temporelle.

Le principe de l'invention, dans ce cas, consiste, pour une durée donnée du ralliement d'un téléphone mobile, à considérer, que cette durée est en fait plus courte, par exemple égale à la moitié de la durée réelle de ralliement. Ceci revient alors à considérer que la fréquence du synthétiseur de l'oscillateur est verrouillée à sa valeur définitive, avant qu'elle ne le soit réellement. Cependant, si on admet ainsi qu'elle est verrouillée avant qu'elle n'ait atteint sa valeur, et si on effectue alors la démodulation des signaux reçus avec une porteuse à une fréquence non verrouillée, on effectue des démodulations incorrectes.

Dans l'invention, on corrige alors ces démodulations incorrectes en utilisant un modèle représentatif de la distorsion de démodulation ainsi apportée du fait de la fin du ralliement. Le modèle utilisé peut être un modèle théorique. Il sera de préférence un modèle mesuré. Le modèle peut par ailleurs être enregistré sous une forme tabulée. Les signaux démodulés et échantillonnés sont quantifiés. Les valeurs quantifiées sont alors corrigées en fonction de la date à laquelle ont été prélevés les échantillons. Cette date est évaluée par rapport à la date à laquelle le saut en fréquence à été déclenché, ou autrement par rapport à la date (artificielle) à partir de laquelle on a considéré (bien que se soit inexact) que la fréquence de l'oscillateur avait été verrouillée à sa valeur définitive, ou encore par rapport à la date où le verrouillage a été constaté.

Le document EP1081855 décrit un procédé de réception de signaux en téléphonie mobile dans lequel on cale en fréquence un oscillateur d'un récepteur en imposant une valeur d'un paramètre de réglage à cet oscillateur du récepteur avant le début d'une fenêtre temporelle de réception au cours de laquelle cet oscillateur doit osciller à une fréquence attendue, et pendant cette fenêtre on démodule des signaux reçus avec un signal produit par cet oscillateur.

L'invention a donc pour objet un procédé de réception de signaux en téléphonie mobile dans lequel
- on cale en fréquence un oscillateur en imposant une valeur d'un paramètre de réglage à cet oscillateur avant le début d'une fenêtre temporelle de réception au cours de laquelle cet oscillateur doit osciller à une fréquence attendue, et
- pendant cette fenêtre on démodule des signaux reçus avec un signal produit par cet oscillateur,
caractérisé en ce que :
- la fréquence attendue n'étant pas rejointe dès le début de la fenêtre temporelle, on corrige progressivement la démodulation en fonction d'un écart, variant dans le temps au cours de la fenêtre, du ralliement de l'oscillateur à la fréquence attendue.

Selon une autre solution, notamment pour détecter les signaux de fréquence, on utilisera une fenêtre d'analyse plus courte qu'une fenêtre temporelle, de préférence égale à sa moitié. On distingue ainsi d'une part la trame idle dont la durée est exactement égale à huit fenêtres temporelles et qui représente la durée, normalisée, d'analyse et la durée réelle d'analyse qui comporte la trame idle ainsi que les fenêtres temporelles précédentes ou suivantes laissées à la disposition du téléphone mobile du fait de son mode de trafic. On distingue enfin, selon cette caractéristique de l'invention une fenêtre d'analyse. La fenêtre d'analyse est la fenêtre qu'utilisent les circuits de calcul du téléphone mobile pour extraire la signification des bits transportés dans une fenêtre temporelle. Dans l'état de la technique, pour éviter des effets de bord, les circuits de filtrage et de traitement prennent en compte une fenêtre d'analyse de durée légèrement supérieure à une fenêtre temporelle.

Une telle fenêtre d'analyse n'est cependant pas accessible si l'oscillateur n'atteint sa valeur verrouillée qu'au cours de la fenêtre temporelle de mesure. Dans l'invention, on a alors remarqué que, pour le signal de fréquence FCCH qui représente une porteuse modulée par un signal modulant par à 67,7 KHz, une telle fenêtre d'analyse associée au circuit de traitement (dont qu'on verra le fonctionnement plus loin) servait à détecter temporellement la présence d'un pic. La date de ce pic est utilisée pour mesurer une date d'apparition du milieu ou du début de la fenêtre temporelle de la station de base surveillée. En fait, parce que la fenêtre d'analyse est plus grande que la durée normalisée (577 microsecondes) d'une fenêtre temporelle, ce pic est légèrement amorti, rendant la définition de la date moins précise que souhaité. On peut cependant obtenir cette précision dans certains cas en déduisant la date du pic comme étant la moyenne temporelle des dates de début et de fin d'un plateau dans lequel ce pic s'est trouvé.

Cependant, du fait que la trame de la station de base recherchée est mal située dans le temps, il peut n'être pas possible de disposer d'une fenêtre temporelle complète de présence du signal F(ou du signal S par la suite) pour pouvoir effectuer la mesure, même le cas échéant en utilisant le perfectionnement précédent. Si la précocité d'apparition de la fenêtre temporelle TS0 surveillée est trop grande, on ne peut pas la détecter correctement.

Dans l'invention on choisit alors d'utiliser une fenêtre d'analyse des circuits de mesure dont la durée est inférieure à la durée d'une fenêtre temporelle normalisée. Par exemple, cette durée de fenêtre d'analyse est égale à une demi durée de fenêtre temporelle normalisée. Dans ces conditions, on a découvert qu'on était capable de reconnaître assez proprement la date de fin du plateau d'apparition du signal de fréquence F. De cette date de fin de plateau on peut déduire la date du début du plateau, date qu'on n'a pas réellement mesurée puisque le synthétiseur n'avait pas encore rallié la fréquence. En définitive, on en profite pour mesurer le calage de la date de la fenêtre temporelle de la station base surveillée. Si cette date est acquise, alors on profite de la durée d'analyse pour repérer la présence d'un signal SCH, et pour mesurer notamment une partie dite midamble, ou séquence d'apprentissage, de ce signal SCH. En décodant dans la même durée d'analyse cette partie midamble on peut alors déduire très finement le calage temporel de la station de base voisine surveillée.

L'invention a donc pour objet dans ce cas un procédé de détection des dates de réception d'un signal de fréquence, dit FCCH, émis selon un protocole de téléphonie mobile de type GSM, dans lequel
- on intègre les signaux détectés sur une fenêtre d'analyse,
   caractérisé en ce que
- la durée de la fenêtre d'analyse est choisie inférieure à une durée d'une fenêtre temporelle d'une trame de transmission de ce protocole.

Dans un troisième mode, on sait que le téléphone mobile doit rechercher toutes les fréquences de balise détectables dans son voisinage. Cependant de telles fréquences balises étant nombreuses et les concordances de temps pouvant être à ce point désorganisées, cette recherche peut prendre une durée non négligeable. Cette durée non négligeable peut empêcher le téléphone mobile de reconnaître la présence d'une station de base voisine avec laquelle il pourrait très facilement communiquer, mais dont la fréquence balise se situe en limite d'exploration de la bande de téléphonie mobile. Du fait de son défaut d'ancienneté dans la cellule, le téléphone mobile peut ne pas encore avoir eu assez de temps pour la reconnaître.

Dans ce cas, dans l'invention on effectue une recherche des fréquences balises pour deux fréquences contiguës simultanément. Ceci se réalise de la façon suivante. Sur une fenêtre d'analyse on va être capable en décalant le synthétiseur de 167,7 KHz par rapport aux fréquences attendues, de détecter, avec un filtre de canal à 200 KHz qui limite la bande de réception, des apparitions des signaux de fréquences dans une bande supérieure ou dans une bande inférieure. De ce fait on peut effectuer cette recherche deux fois plus rapidement.

Dans ces conditions l'invention a également pour objet un procédé de mesure d'un signal de fréquence, dit FCCH, émis à une fréquence attendue selon un protocole de téléphonie mobile de type GSM, dans lequel
- on détecte des signaux reçus,
- on produit avec un oscillateur local un signal à une fréquence de démodulation,
- on démodule les signaux détectés à l'aide de ce signal à une fréquence de démodulation,
- et on mesure le signal de fréquence dans les signaux démodulés,
   caractérisé en ce que
- la fréquence de démodulation du signal de l'oscillateur local est calée à une valeur égale à la demi-somme de deux fréquences attendues contiguës augmentée de la valeur d'un signal modulant ce signal FCCH en fréquence pure.

Dans un quatrième mode, s'agissant du signal du synchronisation SCH on procède à la détection de ce signal SCH en deux fois. Au cours d'une première fois, lors d'une première occurrence de ce signal SCH, on cherche à y reconnaître la présence du signal de midamble. Avec ce signal de midamble on effectue un calage précis dans le temps. Par la suite lors d'une occurrence suivante du même signal SCH de la même station de base, on mesure les données transportées dans ce signal SCH et on en déduit un numéro de trame réduit et /ou un code de couleur de station de base.

L'invention a donc pour objet un procédé de détection et de mesure d'un signal de synchronisation, dit SCH, émis selon des occurrences multiples conformément à un protocole de téléphonie mobile de type GSM, dans lequel
- on déduit d'une mesure de ce signal SCH un calage temporel précis d'un cadencement de ce signal SCH ainsi qu'un numéro de trame réduit et ou un code de couleur d'une première station de base émettrice de ce signal SCH,
   caractérisé en ce que,

- on mesure à une première date, dans une première occurrence du signal SCH, une séquence d'apprentissage transportée par ce signal, et on en déduit un calage temporel précis du cadencement de ce signal SCH, et
- on mesure à une deuxième date, dans une deuxième occurrence du signal SCH postérieure à la première occurrence, des données transportées dans ce signal SCH, et on en déduit un numéro de trame réduit et ou un code de couleur d'une station de base émettrice de ce signal SCH.

Selon un cinquième mode spécial, le téléphone mobile reconnaît que malgré toutes les procédures envisageables, notamment celles citées ci-dessus, il ne lui sera pas possible de détecter la présence d'une station de base dont on lui a signalé l'existence. Dans ces conditions, le téléphone mobile demande alors à la station de base de lui ménager une durée d'analyse plus longue en ne lui transmettant pas de données pendant cette durée plus longue, et en n'attendant pas que le téléphone mobile transmette des données à la station de base pendant ce supplément de durée. Le supplément de durée idle peut être ajouté directement après une durée idle, ou procuré à un autre moment (notamment indiqué dans la requête à cet effet par le du téléphone mobile). Le téléphone mobile demande par exemple de rester oisif pendant deux trames successives, au moins un certain nombre de fois toutes les 26 trames, de façon à pouvoir, avec l'effet de glissement récupérer des informations sur les stations de base voisines dont le synchronisme temporel est mal adapté.

Dans ces conditions l'invention a pour objet un procédé de détection et de mesure, dans un téléphone mobile, d'un signal de fréquence et ou de synchronisation, dits respectivement FCCH et SCH, émis par une première station de base selon des occurrences multiples conformément à un protocole de téléphonie mobile de type GSM, caractérisé en ce que
- le téléphone mobile lance une requête à une deuxième station de base avec laquelle il est en communication active lui enjoignant de cesser d'émettre ou de recevoir des données le concernant pendant une durée.

Pour tous ces procédés, l'invention concerne également les téléphones mobiles susceptibles de les mettre en oeuvre.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1a à 1c : des représentations déjà commentées des allures de canaux de balise et de trafic dans le domaine de la téléphonie mobile entre un téléphone mobile et une station de base ;
- Figure 2 : la présentation malencontreuse déjà commentée des fenêtres temporelles des différentes stations de base à l'endroit d'un téléphone mobile ;
- Figure 3 : la représentation schématique d'un téléphone mobile en relation avec une station de base, situé dans le voisinage d'autres stations de base et utilisé pour mettre en oeuvre le procédé de l'invention ;
- Figure 4 : des diagrammes temporels montrant les conséquences des occurrences précoces des fenêtres temporelles de station de base voisines à surveiller ;
- Figures 5a et 5b : des représentations du signal de balise (ou autre) démodulé, échantillonné et quantifié, avant correction et des effets du retard de ralliement par rapport au moment du décodage ;
- Figures 6a et 6b : une représentation schématique d'une fenêtre d'analyse d'un circuit de traitement, et les effets de la réduction de durée d'une telle fenêtre ;
- Figure 7 : une représentation spectrale d'un signal de fréquence émis par une ou des balises montrant des calages différents dans le but d'acquérir deux signaux dans des fréquences de balises contiguës simultanément ou au moins l'un d'entre eux s'il est présent.

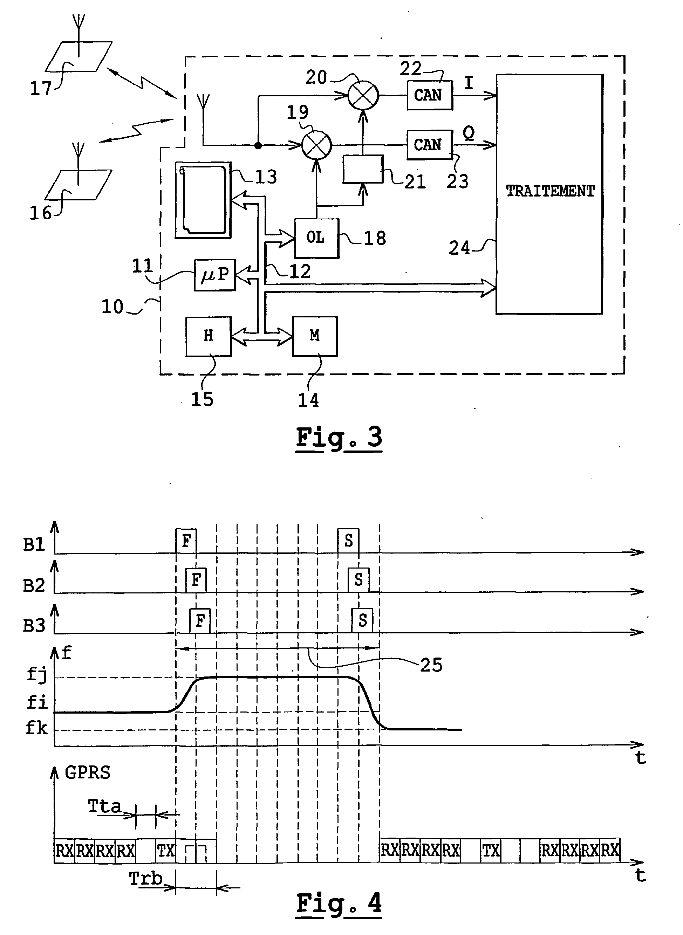

La figure 3 montre un téléphone mobile utilisable pour mettre en oeuvre le procédé de l'invention. Le téléphone mobile 10 comporte d'une manière symbolique un microprocesseur 11 en relation par un bus 12 de commandes, d'adresses et de données avec une mémoire programme 13, une mémoire de données 14 ainsi que différents circuits. Parmi ces circuits figure une horloge 15 permettant de repérer temporellement la synchronisation, en émission ainsi qu'en réception, du cadencement des trames des signaux échangés avec une station de base 16. Les données correspondantes sont mémorisées dans la mémoire 14. Par ailleurs l'horloge 15 sert également pour repérer les décalages temporels correspondant à d'autres stations de base 17 dans le voisinage desquelles se situe le téléphone mobile 10, et avec lesquelles il est susceptible d'entrer en relation au moment d'un hand-over. Parmi les autres circuits figurent un oscillateur local 18 ainsi que différents circuits de démodulation, notamment en quadrature, comportant deux mélangeurs 19 et 20 et un déphaseur 21, ainsi que des circuits d'échantillonnage et de quantification 22 et 23 produisant des signaux I et Q quantifiés résultant de la démodulation. Ces signaux I et Q sont ensuite traités dans des circuits de traitement 24 en vue d'être exploités par le téléphone mobile, sous forme acoustique pour la transmission de la parole, ou sous forme de données à transmettre à un système informatique dans d'autres cas. Les circuits 24 peuvent également être réalisés sous une forme logicielle par un sous-programme mémorisé dans la mémoire 13 et mis en oeuvre par le microprocesseur 11.

La figure 4 et les figurés 5a et 5b permettent de comprendre le premier mode spécial de mise en oeuvre du procédé de l'invention. Sur la figure 4 notamment sont montrés d'une part un diagramme temporel GPRS montrant la répartition des fenêtres temporelles de réception, RX, et de transmission, TX, séparées les unes des autres respectivement par les temps Tta et Trb. Le temps Trb est plus grand que le temps Tta parce qu'il est normalement possible, lors des opérations de trafic conventionnel, de mesurer pendant la durée Trb la présence d'une fréquence de balise, donc de caler le synthétiseur sur cette fréquence de balise avant de rejoindre la fréquence de réception. Le temps Tta correspond au temps de basculement de fréquence, augmenté du temps de propagation et de décalage des trames d'émission par rapport aux trames de réception. Le diagramme temporel f montre, lors de la fin de la fenêtre de transmission TX, le basculement de la fréquence du synthétiseur pour passer d'une fréquence fi, utilisée en émission, à une fréquence fj utilisée pour surveiller une station de base voisine. A l'issue de la durée d'analyse 25, la fréquence de l'oscillateur doit également basculer de la valeur fj à une fréquence fk utilisée en réception.

Les basculements des fréquences se présentent normalement sous la forme d'une évolution monotone. En principe le ralliement en fréquence se fait par un asservissement avec une réponse méplate, sans oscillation. Les diagrammes supérieurs B montrent, pour les fréquences balises des stations de base voisines, la difficulté qu'il y a à capturer les signaux de fréquence F et de synchronisation S.

Dans la partie supérieure B1, le signal de fréquence F n'est pas captable normalement, sinon il faudrait que l'oscillateur 18 bascule de fréquence instantanément. Cependant dans ce cas, le signal S est captable car il se trouve, dans la trame suivante, dans l'avant dernière fenêtre temporelle laissant encore une fenêtre temporelle pour permettre le basculement fj fk.

Dans le diagramme temporel B2 situé en dessous, le décalage temporel des deux stations de base est tel que les fenêtres temporelles TS0 de la station de base à surveiller tombent en partie lors de l'avant dernière et en partie lors de la dernière fenêtre temporelle de la trame de réception du téléphone mobile 10. Si ce téléphone mobile 10 a alors un temps de monté suffisamment rapide pour rejoindre à la fois la fréquence fj depuis la fréquence fi et la fréquence fk depuis la fréquence fj, il est possible de mesurer les signaux F et S dans la même occurrence. Cependant ceci conduit à avoir des basculements en fréquence dont la durée est inférieure à la moitié de la durée d'une fenêtre temporelle normalisés.

Sur le troisième diagramme 83, le décalage est tel que la capture d'un signal de fréquence F sera possible mais que la capture simultanée du signal de synchronisation S pour la station de base concernée ne le sera pas. Car alors il ne resterait plus assez de temps pour basculer de la fréquence fj à la fréquence fk.

Le diagramme B2 montre clairement que la durée utile de mesure de la fenêtre d'analyse 25 est limitée à une durée de 9 fenêtres temporelles normalisées, et ce, à condition par ailleurs, d'avoir un ralliement suffisamment rapide, inférieur à la durée d'une demie fenêtre temporelle. Un but de l'invention est notamment de permettre d'agir sur cette fenêtre d'analyse pour la faire passer à une durée utile de 9,5 fenêtres temporelles normalisées. Ceci serait équivalent alors à disposer d'un temps de ralliement égal à un quart des durées de fenêtres temporelles normalisées.

Comme ce n'est physiquement pas le cas, on prévoit dans l'invention de provoquer une démodulation des signaux reçus notamment avec les circuits 18 à 23 alors que l'oscillateur 18 n'est pas encore stabilisé et verrouillé à la fréquence attendue. Sur le plan pratique, on peut considérer que les circuits 22 et 23 donnent une mesure de la variation des signaux I et Q d'un échantillon au suivant. Autrement, cette variation peut être obtenue par soustraction algébrique entre deux mesures successives. Dans le cas d'un signal de fréquence, modulé par un signal modulant à une fréquence pure de 67,7kMz, et si la fréquence de porteuse est stable, les écarts des différents signaux I et Q les uns par rapport aux autres, révélant la constance de la modulation, doivent être nuls.

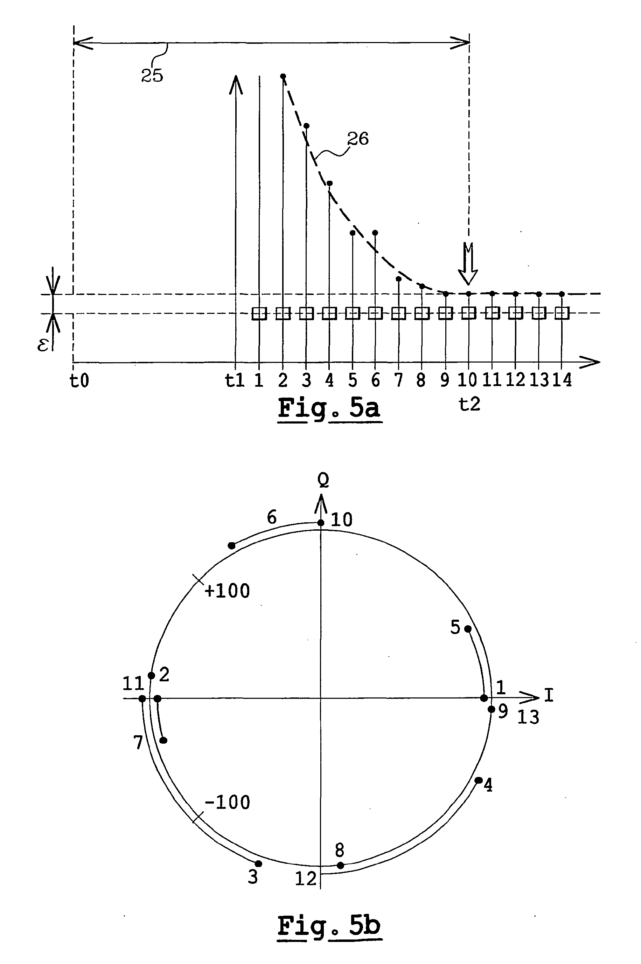

Or, du fait de la variation de la fréquence de l'oscillateur 18, au moins au début de la démodulation du fait de la fin du ralliement, un écart est non nul car des déphasages sont rencontrés. Ainsi, figure 5a, par rapport à une date t0 à laquelle on lance le basculement de fréquence, on peut repérer une première date t1, date à laquelle on considérera que les échantillons démodulés peuvent être pris en considération sous réserve de leur appliquer une correction selon l'invention, et une date t2, date à laquelle on pourra considérer que l'oscillateur local est verrouillé. Dans l'état de la technique, la durée séparant les dates t0 et t2 était égale à la durée Tta (à la durée de propagation près). La durée t0-t2 était ainsi neutralisée. Dans l'invention seule la durée t0-t1 sera neutralisée compte tenu de ce que pendant la durée t1-t2 la démodulation pourra être exécutée.

Sur la figure 5b on a ainsi montré qu'après la date t1 on mesure, c'est à dire qu'on démodule et qu'on quantifie, un premier échantillon numéro 1 et ainsi de suite jusqu'au numéro 11. Les échantillons 1 et suivants sont placés sur le diagramme I et Q de la figure 5b à une place correspondant à leur quantification. Sur le diagramme de la figure 5a, on porte pour l'échantillon 2 la différence de phase entre celle de l'échantillon 1 et celle de l'échantillon 2. Ainsi de suite pour les échantillons 3 à 9. Les échantillons 10 et suivants surviennent après de la date t2, lorsqu'on peut considérer que l'oscillateur est verrouillé.

On observe, sur la figure 5a, que pendant la période t1-t2 les échantillons qui sont repérables par leur position temporelle (et donc leur numéro) par rapport à l'une quelconque des dates t0, t1 ou t2 sont affectés d'erreurs. Selon l'invention ces erreurs sont mesurables soit par un modèle théorique, soit par une mesure directe, et peuvent être appliquées en correction lors de la démodulation et de la quantification. On notera par ailleurs qu'un tel mécanisme est déjà connu dans la téléphonie mobile où, pour tenir compte de la dérive en fréquence des oscillateurs par rapport aux fréquences calibrées, il est prévu de mesurer, sur une fréquence attendue donnée, un écart ε, voir figure 5a, affectant la mesure des échantillons du signal de fréquence. En correspondance, il est connu d'appliquer, même lorsque la fréquence de démodulation de l'oscillateur 18 est bien verrouillée, cet écart ε en correction à tous les échantillons trouvés.

Dans l'invention, au lieu d'appliquer un écart ε identique à tous les échantillons, on décide d'appliquer un écart ε augmenté de la correction (positive ou négative) relative au ralliement en fréquence. Cette correction évolue progressivement dans le temps, en s'amenuisant. Dans ce but dans la mémoire 14 (figure 3), on mémorisera une table dont les enregistrements comporteront en adresse les dates relatives des échantillons, ou leur numéro, et en contenu la valeur de la correction correspondante. Autrement dit, la correction reviendra à traiter dans le circuit 24 les échantillons non plus à la valeur à laquelle ils ont été mesurés mais à leur valeur mesurée corrigée, par exemple représentée par des petits carrés sur la figure 5a en tenant compte des corrections.

L'allure de la courbe 26 qui représente les corrections à affecter, en fonction du temps, peut être modélisée. Elle peut par exemple être assimilée à une exponentielle ou à une hyperbole. D'une manière préférée, la courbe 26 résultera d'une mesure. Ainsi il est possible, lors de la détection d'un premier signal FCCH, facilement accessible, de décaler en retard le ralliement en fréquence, de mesurer les échantillons démodulés et quantifiés, et de repérer la date t2 à partir de laquelle les variations de phases sont constantes. A partir de cette date t2, en remontant le temps, il est possible alors de déduire un historique sur un certain nombre d'échantillons et d'élaborer pour ceux-ci les valeurs de correction. Par exemple de l'échantillon 10 on peut remonter jusqu'à l'échantillon 2 et ainsi gagner en durée de mesure. En effet, il suffit de porter les valeurs ainsi mesurées dans la table pour en déduire, lors d'une occurrence suivante, les corrections à apporter. De préférence comme indiqué ci-dessus, la fenêtre au cours de laquelle l'écart sera mesuré sera une fenêtre temporelle de type FCCH puisque cette dernière se prête particulièrement bien à une telle mesure du fait de la constance de la modulation à 67,7khz. La correction montrée ci-dessus est schématique, une correction plus juste pouvant comporter une étude statistique (pour des même dates t0, t1, t2 relatives à une fenêtre temporelle, et pour plusieurs mesures successives).

Bien entendu, les corrections dépendent de préférence de la valeur du saut en fréquence. En effet, si le saut de la fréquence fi à la fréquence fj est plus grand, les corrections devront en être affectées d'autant. Pour les valeurs des grands sauts, on pourra admettre que la correction doit être pondérée, par exemple linéairement, par la hauteur du saut. Par contre, si les sauts en fréquence sont de faible amplitude, alors on pourra considérer que l'oscillateur se verrouille plus rapidement. Dans ce cas on pourra être dispensé de faire la correction. La pondération comportera donc un coefficient multiplicateur dépendant de la hauteur du saut et qui dans certains cas peut valoir 0. Le coefficient pondérateur peut être accessible dans une autre table à un enregistrement dont l'adresse correspond à la hauteur du saut

Bien entendu l'invention est particulièrement utile dans le domaine des transmissions de données en mode GPRS puisque c'est un de ceux pour lesquels les exigences de basculement de fréquence sont les plus draconiennes.

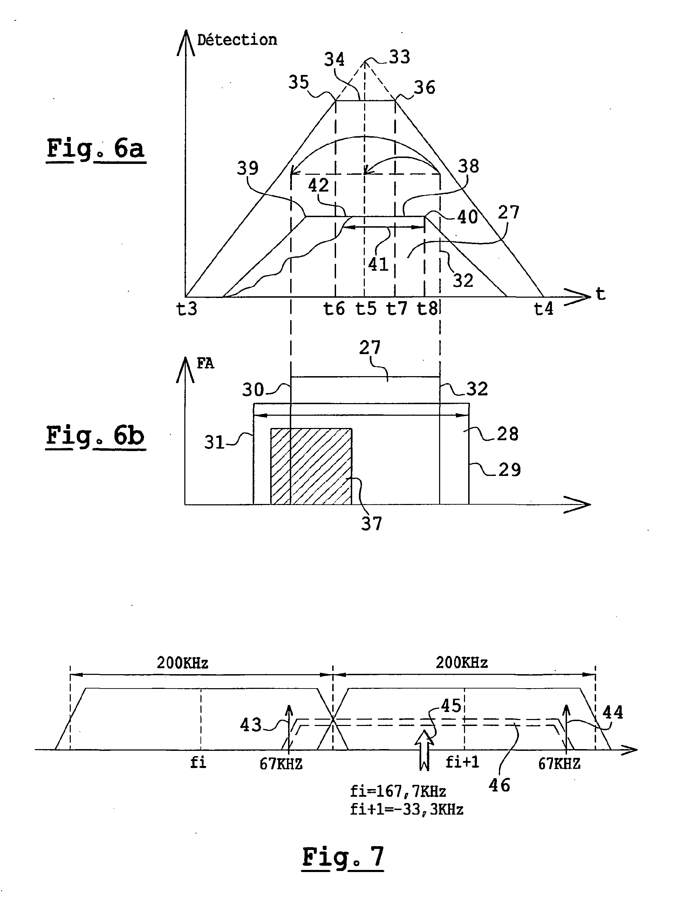

Les figures 6a et 6b montrent schématiquement les modes de traitement des circuits 24. Sur ces figures, on distingue une fenêtre temporelle normalisée 27 qui va être analysée à l'aide d'une fenêtre d'analyse 28. Dans un exemple simple, notamment pour la mesure des signaux de fréquence FCCH, l'analyse consiste à additionner les échantillons démodulés et quantifiés pendant toute la durée de la fenêtre 28. La fenêtre d'analyse 28 est une fenêtre glissante par rapport à la fenêtre 27. Autrement dit, le circuit 24, ou la partie de programme de la mémoire 13 qui effectue ce travail, accumule les résultats d'un certain nombre d'échantillons étalés sur une fenêtre d'analyse 28.

Pour simplifier, si la fenêtre d'analyse 28 a exactement la même durée que la fenêtre temporelle 27, lorsque le front avant 29 de cette fenêtre d'analyse 28 pénètre dans la fenêtre 27, par le début 30 de cette fenêtre 27, l'accumulation des signaux démodulés et quantifiés commence à avoir un sens. En effet, auparavant cette accumulation n'avait pas de sens puisque, étant hors de la fenêtre et les quantifications étant aléatoires, leur accumulation conduisait à un résultat nul. C'est ce que montre la figure 6a à la date t3. Puis la fenêtre 28 glisse le long de la fenêtre 27 jusqu'à la date t4 où le front arrière 31 de la fenêtre 28 déborde la fin 32 de la fenêtre temporelle 27. A la date t4, l'accumulation redevient nulle.

Entre la date t3 et la date t4, bien entendu le signal d'accumulation a subi une croissance, jusqu'à un point culminant 33 et une date t5, avant la décroissance jusqu'à la date t4. La date t5 indique normalement le milieu de la fenêtre temporelle 27 d'où on déduit le début 30 et la fin 32 de cette fenêtre temporelle 27. Dans l'état de la technique, compte tenu de ce que, pour des raisons de précaution, la fenêtre d'analyse 28 est plus longue que la fenêtre temporelle 27, la date t5 n'est pas rencontrée mais est remplacé par un plateau 34 et par des bords de plateau respectivement 35 et 36 situés symétriquement dans le temps, à des dates t6 et t7, de part de d'autre de la date t5. Il est connu avec une telle fenêtre 28 de déduire la date t5 de ces dates t6 et t7

Cependant, dans le cas où la fenêtre temporelle F est trop proche du début de la durée d'analyse 25, voir figure 4, le ralliement de l'oscillateur 18 peut être tellement imparfait que, même avec les perfectionnements précédents, aucune correction significative ne peut être prise en compte. Dans ces conditions le signal FCCH correspondant ne peut pas être mesuré. Dans l'invention, on le mesure quand même en choisissant une courte fenêtre d'analyse 37. La fenêtre 37 est montrée en hachures sur la figure 6b comparativement à la fenêtre d'analyse 28. Pour simplifier dans l'exemple, on a choisi une fenêtre d'analyse 37 dont la durée est égale à la moitié d'une fenêtre temporelle 27. Cependant il est possible de prendre une durée plus courte par exemple du tiers. Le choix d'une fenêtre 37 courte, en temps normal, n'est pas judicieux. Un tel choix conduit aussi à un plateau 38 avec des débuts et des fins 39 et 40 de plateau. Mais le plateau 38 est d'amplitude moins élevée. Dans l'état de la technique, une telle fenêtre d'analyse plus courte n'est pas utilisée parce qu'elle conduit finalement à une accumulation moins grande et donc, en définitive, est beaucoup plus facilement soumise aux aléas de la mesure, son résultat est moins précis.

Selon l'invention, une fenêtre de taille réduite apporte tout son intérêt dans le cas où, la fenêtre temporelle F étant trop proche du début de la fenêtre d'analyse 25, la démodulation, la quantification et l'accumulation n'auraient pas de sens avec une fenêtre d'analyse entière 28. Par contre avec une fenêtre 37 courte, on peut jouir alors d'un plateau 41 de taille réduite. Le bord avant 42 du plateau 41 n'a pas de signification particulière, si ce n'est de concrétiser le verrouillage de la fréquence de l'oscillateur 18. Le plateau 41 possède néanmoins, comme le plateau 38 par rapport à la même fenêtre temporelle 27 une fin 40 à une date t8. La date t8 est placée exactement au même endroit que celle qui serait obtenue si la fréquence de démodulation avait été verrouillée avant la réception de la fenêtre 23. La date t8 est donc exacte, tout en autorisant un ralliement tardif. Dans l'invention, on se sert de la date t8 pour retrouver la date t5 du sommet 33, ou plus généralement pour caler temporellement la trame de la station de base surveillée. On peut ainsi indiquer que la durée qui sépare la date t8 de la fin 32 de la fenêtre temporelle 27 est égale à la moitié de la durée de la fenêtre d'analyse 37. Autrement dit, trouver la date t5 du milieu de la fenêtre temporelle 27 revient à ajouter à la date t8 la durée de la moitié de la fenêtre d'analyse 37, et à retrancher 288,5 microsecondes (577/2). Plus la durée de la fenêtre 27 est courte, plus le principe de mesure est accueillant vis-à-vis des retards de ralliement. Cependant, la robustesse de la mesure en pâtît. Un bon compromis est d'utiliser une fenêtre 37 de durée comprise entre un demi et un tiers d'une durée de fenêtre normalisée.

Dans l'invention, on peut se servir de cette méthode notamment dans le cas B1, figure 4, pour détecter la fin du signal F. En effet ce signal étant tellement proche de la fin de la fenêtre temporelle TX d'émission du téléphone mobile, il est illusoire, même avec les corrections de démodulation de pouvoir décoder tout le signal F. Cependant, avec la méthode de fenêtre courte 37 il est possible de décoder la fin de ce signal F, au besoin en utilisant pour une certaine partie du plateau 38, proche du début 42 la correction vue ci-dessus. Néanmoins en obtenant la date t8 on peut calculer la date du sommet 33.

Dans ces conditions, compte tenu qu'un signal de type SCH est présent 8 fenêtres temporelles plus tard, et qu'on connaît par ailleurs relativement précisément la fréquence de la balise de la station de base surveillée, ainsi que le décalage de cadencement temporel entre cette station de base surveillée et la station de base en relation avec le mobile, on peut alors mesurer ce signal S qui se trouve 8 fenêtres temporelles plus tard. On observera qu'en agissant ainsi on peut acquérir les deux signaux d'un coup et transformer une situation délicate en une situation particulièrement bien exploitée.

La figure 7 montre d'une manière schématique pour une fréquence fi la position spectrale d'une composante 43 à 67,7khz. Elle montre également, pour une fréquence fi+1 contiguë, une même composante 44 décalée de 67,7khz. Normalement, pour la détection de la composante 43 ou 44, l'oscillateur 18 doit être calé en fréquence fi ou fi+1, au centre de la bande. Dans ces conditions, un filtre de canal, non représenté sur la figure 3 mais qui peut par ailleurs résulter du traitement 24, a une largeur de 200khz.Un tel filtre de canal permet très facilement de recevoir la composante 43 ou la composante 44 selon le calage en fréquence retenu. L'inconvénient présenté par une telle méthode se situe dans le fait que chaque fréquence de balise fi ou fi+1 doit être testée séparément. Vu le nombre de fréquences disponibles, et du fait des enchevêtrements temporels, notamment en mode GPRS 4+1, il n'est pas toujours bien facile de détecter la présence d'une fenêtre temporelle de type FCCH. Il peut falloir attendre par exemple 510 trames, soit environ 2 secondes pour capter une fréquence. Si on retient une durée similaire pour capter les signaux de type FCH, et qu'on prévoit par ailleurs d'explorer 300 fréquences, on obtient vite un temps de recherche de l'ordre de 20 minutes, bien supérieur quelques fois au temps passé par un mobile qui traverse une cellule.

Aussi dans l'invention, plutôt que de faire une recherche à une fréquence fi puis à une fréquence fi+1, et ainsi de suite, on prévoit de faire la recherche, pour les signaux de type FCCH en calant les fréquences à des valeurs égales à fi+167,7khz, soit fi+1-33,3khz. Compte tenu du caractère synthétique du calage de l'oscillateur local 18, notamment à l'aide du microprocesseur 11, il est possible de forcer ce dernier à osciller à de telles fréquences référencées 45 sur la figure 7. Le filtre de canal 46, qui suit naturellement la fréquence de l'oscillateur 18, du fait qu'il traite les signaux démodulés, comporte alors dans sa bande basse la composante 43 et dans sa bande haute la composante 44. En effet le décalage de 167,7khz correspond à un décalage de 100khz (la moitié de l'écart entre les fréquences fi et fi+1), augmenté du décalage temporel de 67,7khz. Bien entendu, on ne fait cette recherche qu'une fréquence sur 2, par exemple pour toutes les valeurs paires de i en numérotant progressivement les fréquences contiguës les unes à la suite des autres.

On pourrait montrer, à l'aide d'un diagramme du type de à celui de la figure 5b, que les échantillons ainsi démodulés au lieu d'être des échantillons révélant une variation de déphasage correspondant à 67,7khz seraient des échantillons correspondant à 100KHz. Pour une fréquence de l'oscillateur 18 calée à la valeur fi, les échantillons se trouvent normalement à l'endroit de la valeur 10, figure 5b, du fait d'un échantillonnage par les convertisseurs 22 et 23 à une fréquence de 270,800KHz. De ce fait, les écarts de phase d'un échantillon à l'autre des signaux modulés à +100khz, ou -100khz, occuperont par rapport à la fréquence de démodulation 45 les positions marquées +100 et -100 sur le diagramme de la figure 5b.

En accumulant alors sur la durée de la fenêtre d'analyse les échantillons mesurés, on obtient le résultat suivant que, si le résultat +100 est trouvé c'est que la fréquence fi+1 est modulée par une composante 44. Si on accumule des résultats -100, c'est que la fréquence fi est modulée par une composante 43. Si le résultat de l'accumulation est nul, c'est qu'aucune des deux fréquences n'est la porteuse d'une balise. Par contre si on obtient un résultat correspondant à l'échantillon 11, c'est que les deux fréquences fi et fi+1 sont toutes deux des fréquences de balise.

D'une manière générale, plutôt que de mesurer les échantillons par la quantification évoquée ci-dessus, il est possible de procéder par une analyse de Fourier, notamment au moyen de circuits réalisant des transformations de Fourier rapides des signaux démodulés. Ou autrement, il est aussi possible, mais dans ce cas ceci reviendrait à modifier légèrement les circuits 24, de réaliser des filtres sélectifs décalés de + ou -100khz de part et d'autre de la fréquence de l'oscillateur 18. Dans ce cas, en fonction de la réponse de chacun de ces filtres, on détecterait la présence des composantes 43 ou 44. Dans tous les cas, l'essentiel est que la fréquence de l'oscillateur soit placée à la valeur 45 indiquée ci-dessus.

Pour que cette méthode puisse être pratiquée, il convient néanmoins de tenir compte des dérives des oscillateurs. De préférence comme on l'a vu précédemment, on acquerra la valeur s de décalage préalablement, et on appliquera ensuite dans le circuit 24 les corrections correspondantes pour les différentes fréquences à démoduler.

Bien entendu, il est possible de mettre simultanément les deux méthodes précédentes, à savoir d'une part mettre en oeuvre la correction de ralliement si la date t2 n'a pas encore été rejointe avant par la fenêtre d'analyse. On peut d'autre part, pour rechercher la date t8, utiliser une durée d'analyse 37 réduite en même temps que par ailleurs la fréquence de calage de l'oscillateur a été décalée de la valeur de 167.7khz.

Dans le cas où on utilise une fenêtre d'analyse réduite, on peut également faire deux analyses simultanées : une analyse avec une fenêtre d'analyse longue comme la fenêtre d'analyse 28 et une analyse avec la fenêtre d'analyse courte comme la fenêtre d'analyse 37. Comme indiqué précédemment, les signaux de type SCH comportent une structure particulière. Ils comportent d'abord une séquence d'apprentissage étendue, placée en position intermédiaire, midamble, de 64 bits ainsi que, de part et d'autre de cette séquence, d'apprentissage, deux fois 39 bits de données eux-mêmes encapsulés par 3 bits de début et de fin respectivement. La séquence d'apprentissage étendue sur 64 bits possède un motif particulier. Elle est commune à toutes les stations de base sur tous les réseaux de type GSM. Elle permet aux téléphones mobiles de faire une analyse fine du canal et de se synchroniser sur la structure de type TDMA de la station de base surveillée.

En pratique cette séquence de 64 bits est décodée à la volée et produit un signal permettant de caler avec une précision inférieure à 1 microseconde le décalage des cadencements de trame entre les deux stations de base. Comme indiqué sur la figure 4, diagramme B3, il est possible que le signal de type SCH soit tellement mal placé dans le temps que son décodage puisse être en partie empêché par la proximité d'un basculement vers une fenêtre temporelle de réception du téléphone mobile. En conséquence il est possible que le signal SCH ne puisse pas être décodé en entier. Dans l'invention on prévoit alors dans ce cas d'effectuer le décodage du signal SCH en deux fois, une première fois au cours de laquelle on décode seulement la séquence d'apprentissage et avec laquelle on en déduit un calage temporel précis du cadencement de ce signal SCH. Puis lors d'une occurrence suivante du même signal SCH, postérieure à la première occurrence, on mesure les données transportées dans ce signal SCH et qui sont contenues dans les 2x39 bits.

Une telle démarche peut conduire à une durée d'analyse deux fois plus longue que nécessaire. On notera toutefois qu'elle permet d'aboutir à un résultat correct qui pourrait dans d'autres cas ne pas pouvoir être atteint. Cependant, pour éviter de perdre du temps, compte tenu de ce que la deuxième occurrence du signal SCH ne se produira que 510 trames plus tard, on prévoit d'effectuer une même démarche, mais vis à vis d'une autre fréquence de balise précédemment repérée, dans la durée qui sépare ces deux occurrences. On provoque ainsi un entrelacement des détections des signaux de type SCH qui sont détectés en partie à chaque fois. On peut facilement montrer que le procédé ne conduit pas à doubler la durée globale d'analyse mais que cette dernière n'en est que marginalement augmentée.

Selon un autre procédé selon l'invention, notamment dans le cadre du mode GPRS 5+1, dans lequel le nombre de fenêtres maximal peut être réduit à 9, on peut prévoir une procédure différente dans laquelle le téléphone mobile demande à la station de base d'augmenter la durée de la période idle, pour la passer par exemple d'une trame à deux trames. Ce faisant, tous les problèmes évoqués ci-dessus peuvent alors être facilement résolus. Si c'est le téléphone mobile qui en fait la demande, la station de base peut accepter que pendant la première trame suivant la prochaine trame idle aucun message ne soit envoyé au mobile, ni aucune demande n'en soit attendue. Par exemple, dans le schéma de répartition à 26 trames de la figure 1c, la première trame avec la réception 8 et l'émission 9 serait aussi maintenue oisive. Au besoin, ce motif à 26 trames avec une première trame 8-9 neutralisée serait maintenu pendant 51 trames de suite, de façon à tenir compte du glissement des fréquences balises par rapport au cadencement du trafic.

Pour lancer une requête à la station de base par laquelle cette station de base enjoint au téléphone mobile de cesser d'émettre ou de recevoir des données, le téléphone mobile peut émettre en direction de la station de base un signal, par exemple dans la dernière fenêtre temporelle TX, précédent sa trame idle dont la séquence d'apprentissage serait différente d'une séquence d'apprentissage utilisée pour une utilisation de type GPRS. Cette séquence d'apprentissage différente serait néanmoins une séquence d'apprentissage reconnue par la station de base et interprétée comme valant requête d'établissement d'une ou plusieurs trames idle supplémentaires. Selon la diversité de ces requêtes, il est même possible que le téléphone mobile demande à la station de base une telle cessation en précisant le nombre et/ou la périodicité des trames supplémentaires pendant lesquelles il souhaite rester oisif. Dans ce cas, le nombre et ou la position des trames idle supplémentaires serait contenu dans les bits de données de part et d'autre de la séquence d'apprentissage

## Revendications

1. - Procédé de réception de signaux en téléphonie mobile dans lequel
- on cale en fréquence un oscillateur d'un récepteur en imposant une valeur d'un paramètre de réglage à cet oscillateur du récepteur avant le début d'une fenêtre temporelle de réception au cours de laquelle cet oscillateur doit osciller à une fréquence attendue, et
- pendant cette fenêtre on démodule des signaux reçus avec un signal produit par cet oscillateur,
**caractérisé en ce que** :
- la fréquence attendue n'étant pas rejointe dès le début de la fenêtre temporelle, on corrige progressivement la démodulation en fonction d'un écart de ralliement de l'oscillateur du récepteur, cet écart de ralliement variant dans le temps au cours de la fenêtre, cet écart de ralliement étant l'écart entre la fréquence instantanée de l'oscillateur du récepteur et la fréquence attendue que l'oscillateur n'a pas encore atteinte.

2. - Procédé selon la revendication 1, **caractérisé en ce qu'**on corrige la démodulation par correction de signaux I et Q démodulés en quadrature par le signal produit par l'oscillateur du récepteur.

3. - Procédé selon l'une des revendications 1 à 2, **caractérisé en ce que** :
- on échantillonne les signaux reçus démodulés, et
- on prélève des valeurs de correction des échantillons démodulés dans une table, à des adresses correspondant à des dates d'acquisition ou à des numéros de ces échantillons démodulés.

4. - Procédé selon l'une des revendications 1 à 3, **caractérisé en ce que** :
- on échantillonne les signaux reçus démodulés, et
- on produit avec un modèle, de préférence exponentiel, des valeurs de correction des échantillons démodulés à des dates correspondant à des dates d'acquisition ou à des numéros de ces échantillons démodulés.

5. - Procédé selon l'une des revendications 1 à 4, **caractérisé en ce que** :
- on mesure au cours d'une fenêtre temporelle précédente un écart progressif de ralliement pour en déduire des valeurs de correction des signaux démodulés.

6. - Procédé selon la revendication 5, **caractérisé en ce que** la fenêtre temporelle précédente est une fenêtre temporelle d'un canal FCCH d'un protocole de téléphonie mobile de type GSM,
- de préférence calée temporellement à l'aide d'une fenêtre encore précédente du même canal FCCH.

7. - Procédé selon l'une des revendications 1 à 6, **caractérisé en ce que** :
- on pondère les valeurs de correction des signaux démodulés en fonction d'un écart, préalable au ralliement, entre une fréquence d'oscillation de l'oscillateur et la fréquence attendue.

8. - Téléphone mobile adapté pour mettre en oeuvre le procédé selon l'une des revendications 1 à 7, notamment pour transmettre des paquets de données en mode GPRS.

## Claims

1. - A method for receiving signals in a mobile telephone, wherein
- an oscillator of a receiver is set in frequency mode by imposing an adjustment parameter value on such receiver's oscillator prior to the start of a receiving temporal window during which such oscillator must oscillate at an expected frequency, and
- whilst in this window, the signals received are demodulated using a signal produced by such oscillator,
**characterised in that**:
- the expected frequency not being attained as of the start of the temporal window, demodulation is progressively corrected depending on a rallying gap of the receiver's oscillator, such rallying gap varying over time during the course of the window, such rallying gap being the gap between the instantaneous frequency of the receiver's oscillator and the expected frequency, yet to be attained by the oscillator.

2. - A method according to claim 1, **characterised in that** demodulation is corrected via correction of demodulated signals I and Q into quadrature via the signal produced by the oscillator of the receiver.

3. . A method according to one of the claims 1 to 2, **characterised in that**:
- the demodulated signals received are sorted, and
- corrective values are taken of the demodulated samples within a table, on premises where the address correspond to the acquisition dates or to the numbers on these demodulated samples.

4. - A method according to one of the claims 1 to 3, **characterised in that**:
- the demodulated signals received are sorted, and
- corrective values of the demodulated samples are produced using a template, preferably exponential, on dates corresponding to the acquisition dates or to the numbers of these demodulated samples.

5. - A method according to one of the claims 1 to 4, **characterised in that**:
- a progressive rallying gap is measured during a previous temporal window in order to deduce the correction values of the demodulated signals.

6. - A method according to claim 5, **characterised in that** the previous temporal window is a temporal window of a FCCH channel of a GSM-type mobile telephone protocol,
- preferably temporarily set using a prior window of the same FCCH channel.

7. - A method according to one of the claims 1 to 6, **characterised in that**:
- the correction values of the demodulated signals are weighted according to a gap, prior to rallying, between an oscillation frequency of the oscillator and the expected frequency.

8. - A mobile telephone adapted to implement the method according to one of the claims 1 to 7, notably for transmitting data packaged in GPRS mode.

## Patentansprüche

1. - Verfahren zum Empfangen von Signalen im Mobilfunk, bei dem
- man einen Oszillator eines Empfängers auf der Frequenz blockiert, indem man diesem Oszillator des Empfängers vor Beginn eines Empfangs-Zeitfensters einen Wert eines Einstellparameters aufzwingt, im Laufe dessen dieser Oszillator mit einer erwarteten Frequenz oszillieren muss, und
- man während dieses Fensters empfangene Signale mit einem Signal demoduliert, das von diesem Oszillator erzeugt wird,
**dadurch gekennzeichnet, dass**:
- da die erwartete Frequenz nicht sofort nach Beginn des Zeitfensters beigestellt wird, man die Demodulation nach und nach in Abhängigkeit von einer Anschlussabweichung des Oszillators des Empfängers korrigiert, wobei diese Anschlussabweichung in der Zeit im Laufe des Fensters variiert, und diese Anschlussabweichung die Abweichung zwischen der momentanen Frequenz des Oszillators des Empfängers und der erwarteten Frequenz ist, die der Oszillator noch nicht erreicht hat.

2. - Verfahren nach Anspruch 1, **dadurch gekennzeichnet, dass** man die Demodulation durch das Korrigieren der Signale I und Q korrigiert, die durch das Signal, das vom Oszillator des Empfängers erzeugt wird, quadraturdemoduliert werden.

3. - Verfahren nach einem der Ansprüche 1 bis 2, **dadurch gekennzeichnet, dass**:
- man die demodulierten empfangenen Signale bemustert, und
- man Korrekturwerte der demodulierten Stichproben an Adressen aus einer Tabelle entnimmt, die dem jeweiligen Datum der Erfassung oder den Nummern dieser demodulierten Stichproben entsprechen.

4. - Verfahren nach einem der Ansprüche 1 bis 3, **dadurch gekennzeichnet, dass**:
- man die demodulierten empfangenen Signale bemustert, und
- man mit einem - vorzugsweise exponentiellen - Modell Korrekturwerte der demodulierten Stichproben an jenen Daten erzeugt, die dem jeweiligen Datum der Erfassung oder den Nummern dieser demodulierten Stichproben entsprechen.

5. - Verfahren nach einem der Ansprüche 1 bis 4, **dadurch gekennzeichnet, dass**:
- man im Laufe eines vorherigen Zeitfensters eine progressive Anschlussabweichung misst, um davon Korrekturwerte der demodulierten Signale abzuleiten.

6. - Verfahren nach Anspruch 5, **dadurch gekennzeichnet, dass** das vorherige Zeitfenster ein Zeitfenster eines FCCH Kanals eines Mobilfunkprotokolls vom Typ GSM ist,
- das vorzugsweise mithilfe eines weiter zuvor liegenden Fensters desselben FCCH Kanals zeitlich blockiert wird.

7. - Verfahren nach einem der Ansprüche 1 bis 6, **dadurch gekennzeichnet, dass**:
- man die Korrekturwerte der demodulierten Signale in Abhängigkeit von einer vor dem Anschluss auftretenden Abweichung zwischen einer Oszillationsfrequenz des Oszillators und der erwarteten Frequenz gewichtet.

8. - Mobiltelefon, das so angepasst ist, das es das Verfahren nach einem der Ansprüche 1 bis 7, speziell zum Übertragen von Datenpaketen im GPRS Modus, umsetzen kann.
